# EUROPEAN PATENT APPLICATION

(11) **EP 4 585 865 A1**
(43) Date of publication of application: **16.07.2025**
(21) Application number: 25150720.8
(22) Date of filing: 08.01.2025
(51) Int. Cl.: F24S 20/67, F24S 25/20, F24S 80/70

(54) **IN-ROOF SOLAR-THERMAL-PANEL FRAME AND SYSTEM**

(30) Priority: 10.01.2024 GB 202400356
(71) Applicant: Senergy Innovations Limited, Carryduff, Belfast, Antrim BT8 8RR (GB)
(72) Inventor: Boyle, Christine Marie, Belfast, BT8 8RR (GB); Strain, Findhan, Belfast, BT8 8RR (GB); McFarlane, John, Belfast, BT8 8RR (GB); McDaid, Julia, Belfast, BT8 8RR (GB); McGonigle, Niall, Belfast, BT8 8RR (GB); Duffy, Sean, Belfast, BT8 8RR (GB); Donaghey, Willie, Belfast, BT8 8RR (GB)
(74) Representative: Doherty, William

(57) **Abstract**

There is provided an in-roof-solar-thermal-panel frame (12) suitable for the receiving of a solar-thermal-panel (26) therein, thereby forming an in-roof solar-thermal-panel system (10). The in-roof-solar-thermal-panel frame (12) has a roof cover connector (18) having a roof-cover-seal receiver (34) that is engageable with a roof-cover seal (36). The roof-cover seal (36) engages with a roof cover in such a way that permits the solar-thermal-panel (26) to sit flush with respect to the exterior roof structure (50).

## Description

The present invention relates to an in-roof solar-thermal-panel frame suitable for housing a solar-thermal panel for the generation of heated water. Such a device may be used as an alternative domestic or industrial hot water heating source in combination with a stored water tank and standard plumbing system. The invention further relates to a system utilising the in-roof solar-thermal-panel frame and a method of installing such an in-roof-solar-thermal-panel system.

Solar panels provide a means of utilising the solar energy incident onto a building either for the purpose of heating or electricity generation. Usually, they will be roof-mounted panels in a direction facing the daytime sun. There are several flaws with the traditional mounting of solar panels on the surfaces of typical building roofs.

Generally, a solar panel will be mounted onto a roof by attaching a mounting frame onto the roof, to which the solar panel is then mounted. This creates a solar panel which is proud of the roof, and which can be very aesthetically displeasing.

Embedded solar panels are available, which are formed having frames with integral flashing so as to prevent leak paths. However, irrespective of solar panel type, all current panel arrangements known in the art still rely on resting atop the roofing lathes. There is considerable projection of the frame beyond the standard roof slope.

A particular issue of solar-thermal panels is their size. Electric solar photovoltaic panels are significantly thinner and more lightweight than solar-thermal panels, and as such, can be installed on roof structures without creating such a detrimental aesthetic impact. Solar-thermal panels are most often bulkier, thicker, and heavier and, as such, are difficult to install onto a roof.

It is an object of the present invention to reduce or substantially obviate the aforementioned problems.

According to a first aspect of the invention, there is provided an in-roof solar-thermal-panel frame comprising: a mounting portion for engaging with a roof structure via an associated fastener; a frame wall portion extending from the mounting portion to define a receiving volume for receiving a solar-thermal panel therein; and a roof cover connector extending outwardly from a top perimeter of the frame wall portion, the roof cover connector having a roof cover- seal receiver for receiving a roof-cover seal therein, such that a top surface of the roof cover connector is in-use flush, substantially flush or proud to a roof cover when the frame wall portion is mounted within the said roof structure.

Traditional recessed roofing components have either integral flashing, or such flashing that needs to be applied below a component that stands proud, significantly reducing the aesthetic impact of the roof structure. In the present invention, a connector is provided for a seal which engages with, for example, tiles or slates, at an upper part of the frame. A frame is therefore provided which interfaces directly with the roof covering allowing flashing to be provided in multiple configurations. A further advantage of this is that the traditional bulky, aesthetic impact of solar panels is circumvented significantly as the solar-thermal panels are less visible when flush with the rest of the roof. Here, the top surface of the roof cover connector can be flush or substantially flush relative to said roof covering. This provides a pleasing aesthetic appearance and reduces unnecessary crevices for the entry of water. There is also the option for the solar-thermal panels to sit proud, should there be a necessity for this, whilst maintaining a sealed watertight connection with the roof cover (such as tiles and/or slates). This may be necessary, for example, when there exists an intrinsic difference to the type or shape of the roofing rafters unto which the solar-thermal-panel frames are mounted.

Optionally, there may be provided a roof-cover seal receivably engaged with the roof-cover-seal receiver.

The provision of a roof-cover seal with the roof-cover-seal receiver allows for the in-roof solar-thermal-panel frame to be directly integrated into a roof.

Preferably, the roof-cover seal may comprise a resiliently flexible material.

Resilient flexibility of the roof-cover seal allows it to conform to the roof cover, such as flashing, tiles or slates whilst maintaining a viable waterproofing means. Other roofing types will also engage with such a roof-cover seal, such as metal or composite roofing.

The roof-cover seal may comprise a plurality of individual projecting seal members.

Projecting seal members provide a buffer to water ingress, whilst also assisting insertion of the roof cover during assembly. These seal members provide a physical grip between said seal members and the roof cover by means of an interference fit that prevents slippage of the roof cover when inserted into the roof-cover seal. Furthermore, the roof-cover-seal receiver and the roof-cover seal may preferably comprise complementarily-engageable seating elements for retaining the roof-cover seal in the roof-cover-seal receiver.

The provision of seating elements means that there is a reduced likelihood of dislodging of the roof-cover seal during either installation or use of the system.

The said complementarily-engageable seating elements of the roof-cover-seal receiver may be provided as a receiver recess and the complementarily-engageable seating elements of the roof-cover seal may be provided as a ridge seatable in the recess or *vice versa.*

Ridges and recesses, preferably positioned so as to be perpendicular to the main channel of the roof-cover-seal receiver, are a good and simple means of holding the roof-cover seal in place in a releasable manner. This does not preclude the inclusion of ridges and recesses in any other portion of the roof-cover-seal receiver such as in the middle portion.

Advantageously, the interengagement of the roof-cover-seal receiver and roof-cover seal allows a watertight seal to be formed between the roof structure and the in-roof solar-thermal-panel frame. The complementarily-engageable seating elements allow not only for the roof-cover seal to remain in place tightly, preventing degradation, but also provide a secondary protection against water from seeping into the frame itself. Further adding to the benefit is that the design of the roof-cover seal allows the roof cover to be inserted into the roof-cover seal at an angle and orientation that is flush with the roof structure, meaning that the watertight functionality is also aesthetically pleasing.

Optionally, the frame wall portion may be formed having an elongate rectangular profile.

This is advantageous as it permits standardised installation without incurring difficulties altering the dimensions and overall structure of the roof. The in-roof solar-thermal-panel frame of the current invention is designed in such a way as to fit within the gap of each rafter space without any further modifications to permit a flush appearance with the surrounding roof elements.

Preferably, the in-roof solar-thermal-panel frame may be dimensioned to fit between a void between adjacent roofing rafters.

This is beneficial, as it allows the installation process to be quick and simple depending on the country. In the UK, for example, the standard centres spacing is 600mm for the majority of housing rafters. As such, the solar-thermal panels can be installed without modification to the existing roofing structure, which reduces time and costs. The solar-thermal-panel frames can be designed bespoke for a specific architecture, and can be made available in different standard sizes, depending on regionality. Further beneficially, the ability of the frame to accommodate bigger or smaller spacing is an essential feature as it permits installation even where size deviation occurs through manufacturing issues, natural wood warping and other such issues that may cause deviation from the standard centres spacing.

Optionally, the receiving volume has a total depth, the roof cover connector comprising at least 15% the depth. Optionally, the frame-wall portion may comprise up to 70% the depth. Furthermore, the mounting portion may comprise up to 5% the depth.

This is advantageous as it allows necessary space to permit fitting of all the necessary elements required for generation of solar-thermal power efficiently. Furthermore, it allows the solar-thermal-panel system to sit flush with the roof-structure whilst maintaining sufficient architectural stability.

Optionally, the mounting portion comprises a bracket engagement connector for engaging with the roof structure.

This is advantageous as the invention is mountable within standard roofing structures using standard roofing battens, or directly to the rafters, so can be placed at variable heights within the roofing structure so that the in-roof solar-thermal-panel frame will always sit flush or substantially flush with the accompanying roof tiles or slates. Furthermore, it allows the roof structure to be fitted with any roof tiles or slates of differing depths, volumes, and aesthetics as the initial height of the seated in-roof solar-thermal-panel frame is determined by the initial mounting height and so will always be flush or substantially flush with whichever tiles or slates are used. The presence of an engagement connector is preferably situated on the base of the mounting portion but may just as preferably be situated as part of the frame wall portion.

Preferably, the frame wall portion comprises a hollow structural support cavity for the placement of solid or non-solid materials.

This is advantageous as it allows the gap between the frame wall portion that surrounds the entire solar-thermal-panel frame to be used for multiple purposes. The solid or non-solid materials may include insulating foam, cable conduits or further structural elements. These can be used in different beneficial ways such as discretely routing associated power cables or increasing the overall insulative capacity of the solar-thermal-panel frame, to reduce conductive heat loss through the frame wall portion.

According to a second aspect of the invention, there is provided an in-roof solar-thermal-panel system comprising an in-roof solar-thermal-panel frame in accordance with the first aspect of the invention and a solar thermal panel engaged with the in-roof solar-thermal-panel frame.

This is advantageous as it permits the in-roof solar-thermal-panel frame to hold all the components necessary for the generation of solar-thermal power within the frame without the addition of other external components.

Optionally, the in-roof solar-thermal panel may comprise at least one of: a glazing layer; an absorber; an insulation layer; and a backing sheet; receivable within the receiving volume of the in-roof solar-thermal-panel frame. A solar photovoltaic absorber may also be provided as part of the panel, either additionally to the thermal absorber or as a composite component.

The in-roof solar-thermal panel may have various components which improve the solar energy capture of the system.

Preferably, the absorber may be formed from a metal or polymer material.

This is beneficial, as it allows for an easy exchangeable mix-and-match approach between absorbers, depending on the user requirement. Specifically, a different absorber may be advantageous in varying climates and geographies. Polymeric materials may usually be more suitable for colder climates due to their resistance to freezing, whilst metal absorbers may act as better absorbers in warmer climates. Any type of absorber material used will have optimal performance conditions, and no limitation is placed on the frame by the absorber material defined herein. The absorber materials may also have different densities and weights, meaning that some absorbers may be more suited to buildings that can only permit a certain weight threshold. Furthermore, the choice of interchangeable absorbers can be dictated by cost or aesthetic ramifications. Those looking for a lower cost solar panel can find this through customisation of said internal panel components in the form of different absorbers. With aesthetics in mind, polymeric absorbers can be coloured black whilst metal absorbers refract light in a different manner which may make them appear as a different colour such as blue. From an aesthetic perspective, this would stand out more against specific designs of tiles and slates, particularly if said tiles and slates are black in colour.

Optionally, a said glazing layer and a said absorber may be provided within the receiving volume spaced apart from one another to form an insulating air gap therebetween.

This is advantageous as it prevents heat losses due to convection and radiation. The presence of an air gap provides a barrier to conductive heat loss and traps hotter air within the space that would otherwise be lost from the panel absorber through convection. Furthermore, the air gap prevents the system overheating as direct contact with the glazing layer and absorber could cause damage to the glazing layer through absorption of intense solar energy.

Preferably the absorber may comprise a plurality of fluid transfer tubes.

Beneficially, the plurality of fluid transfer tubes allows for the generation of solar-thermal power across the entirety of the solar absorber by allowing the movement of working fluid throughout the panel surface, reducing heat loss, and permitting the generation of heated working fluid at any position across the panel.

Preferably, the solar-thermal panel may comprise an absorber manifold receivably engageable with the frame wall portion.

An absorber manifold allows for the spreading of fluid in the solar-thermal panel to improve efficiency of absorption across the absorber.

The frame wall portion may comprise a receiving aperture with which an absorber manifold is engageable.

This is beneficial, as the receiving aperture allows the placement of the absorber manifold whilst permitting the system to remain closed. The absorber manifold protruding from the receiving aperture allows connection to the building plumbing system and associated hot water storage tank. Furthermore, the sealed nature of the manifold to the receiving aperture via a manifold rubber connector prevents excess conductive heat losses by preventing dissipation of heat from the absorber manifold outlet pipe to the surrounding frame architecture.

The in-roof solar-thermal-panel system may further comprise a frame-insert member receivably engageable in the receiving aperture for supporting the said absorber manifold.

This is advantageous because the frame insert member allows access to the absorber manifold and the absorber manifold outlet pipe for repair and renovation without disrupting the roof cover connector of the in-roof solar-thermal-panel frame. This means that such repairs requiring access to the absorber manifold do not require disassembly of the entire frame including complete removal of the roof-cover seal, as this can simply be removed partially.

Preferably, there may be provided a plurality of in-roof solar-thermal-panel frames with the solar-thermal-panel system.

This is advantageous as it allows the installation of multiple panels for the generation of more solar-thermal power than what would be achievable with a singular panel. It also allows costs to be saved as installation of multiple panels at the same time during construction rather than retrofitting later allows for a greater cost-benefit, recuperating initial spending through increased energy saving. There is also advantage in the provision of decreased costs for roof covering such as tiles and/or slates as less would be required to span the overall roof, which often require replacement. The installation of a solar-thermal-panel system as outlined in the current invention maintains the roof integrity whilst providing a suitable covering. Costs are further recuperated by the fact that the roof is then used as an energy-generating surface.

Optionally, the in-roof solar-thermal-panel system may comprise a roof cover strip installable between roof-cover seals of adjacent in-roof solar-thermal-panel frames or other existing solar-thermal panels and solar photovoltaic panels.

Where multiple frames are provided in close proximity, a bespoke waterproofing solution becomes necessary. However, a dedicated strip engageable on both sides with the roof-cover seals provides this functionality neatly.

According to a third aspect of the invention, there is provided method for installing an in-roof solar-thermal-panel system into a roof structure, the method comprising the steps of: a. providing an in-roof solar-thermal-panel system in accordance with the second aspect of the invention; b. engaging a roof-cover seal with the roof-cover-seal receiver of the in-roof solar-thermal-panel frame; c. seating the mounting portion of the in-roof solar-thermal-panel frame on a roof structure into which the in-roof solar-thermal-panel frame is to be installed, so that the frame wall portion defines a receiving volume between adjacent rafters of the roof structure; and d. engaging a roof cover member of the roof cover of the roof structure with the roof-cover seal so as to be flush or substantially flush to the said roof cover to therefore form a water-tight seal between the in-roof solar-thermal-panel frame and the roof cover..

This is advantageous as it provides a simple method for the assembly and installation for the integration of a solar-thermal panel within a roof-structure. The installation process is designed to be modular, and fitted during the roofing construction process, typically into new-build homes. The retrofitting of the roof-cover seal to the in-roof solar-thermal-panel frame allows any roof cover to be used and also permits differences in the use of additional roof cover elements such as the slanting tiles and/or slates, increasing user choice whilst maintaining a watertight structure.

The method may further comprise a step e. of engaging a roof cover strip between adjacent in-roof solar-thermal-panel frames to form a watertight seal therebetween.

This allows for waterproofing between adjacent frames across a rafter width, where a roof tile would not otherwise fit.

According to a further aspect of the invention, there is provided an in-roof solar-panel frame comprising: a mounting portion for engaging with a roof structure via an associated fastener; a frame wall portion extending from the mounting portion to define a receiving volume for receiving a solar panel therein; and a roof cover connector extending outwardly from a top perimeter of the frame wall portion, the roof cover connector having a roof cover-seal receiver for receiving a roof-cover seal therein, such that a top surface of the roof cover connector is in-use flush, substantially flush or proud to a roof cover when the frame wall portion is mounted within the said roof structure.

For a better understanding of the present invention, and to show more clearly how it may be carried into effect, reference will now be made by way of example only to the accompanying drawings, in which:
Figure 1 shows an isometric representation of one embodiment of an in-roof solar-thermal-panel system in accordance with the second aspect of the invention;
Figure 2 shows an exploded isometric representation of the in-roof-solar-thermal-panel system of Figure 1;
Figure 3 shows an isometric representation of one end of the in-roof solar-thermal-panel system of Figure 1;
Figure 4A shows a slice representation of the end of the in-roof solar-thermal-panel system of Figure 3, taken along a vertical plane through line X-X;
Figure 4B shows an enlarged representation of detail A of Figure 4A;
Figure 5A shows a slice representation of the in-roof solar-thermal-panel system of Figure 3, taken along a vertical plane through line Y-Y;
Figure 5B shows an enlarged representation of detail B of Figure 5A;
Figure 6 shows an end view of roofing structure having an in-roof solar-thermal-panel system comprising two in-roof solar-thermal-panel frames installed between adjacent rafters;
Figure 7 shows slice representation of the in-roof solar-thermal-panel system of Figure 6 taken along a plane through line Z-Z;
Figure 8 shows an enlarged representation of the roof cover connector of Figure 7;
Figure 9 shows an isometric representation of the in-roof solar-thermal-panel system of Figure 7;
Figure 10 shows a slice representation of the in-roof solar-thermal-panel system of Figure 6 as indicated in detail C;
Figure 11A shows a pictorial representation of a roof structure into which an in-roof solar-thermal-panel system is to be installed;
Figure 11B shows a pictorial representation of an in-roof solar-thermal-panel system installed in the roof structure of Figure 11A; and
Figure 12 shows an exploded isometric representation of a second embodiment of an in-roof-solar-thermal-panel system in accordance with the second aspect of the invention.

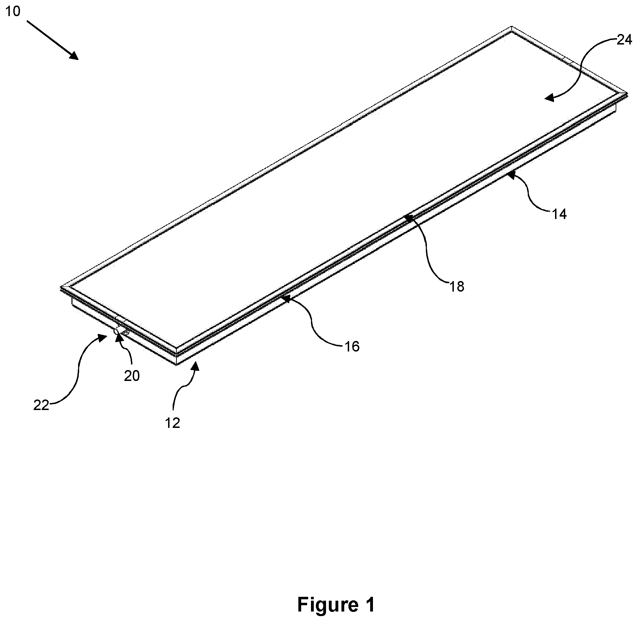

Referring firstly to Figure 1 there is indicated an in-roof solar-thermal-panel system referenced globally at 10. An in-roof solar-thermal-panel frame 12 of the solar-thermal-panel system 10 is designed to be installed into a roof for the generation of solar-thermal energy. The in-roof solar-thermal-panel frame 12 comprises a mounting portion 14, a frame wall portion 16 and a roof cover connector 18. Also shown is an absorber manifold outlet pipe 20 of an absorber manifold 22 protruding from one section of the frame wall portion 16, and a glazing layer 24 seated within the in-roof solar-thermal-panel frame 12.

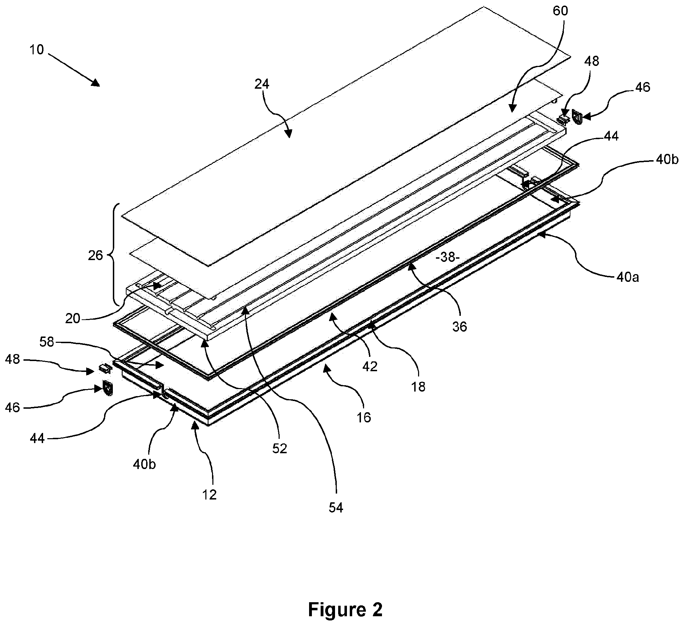

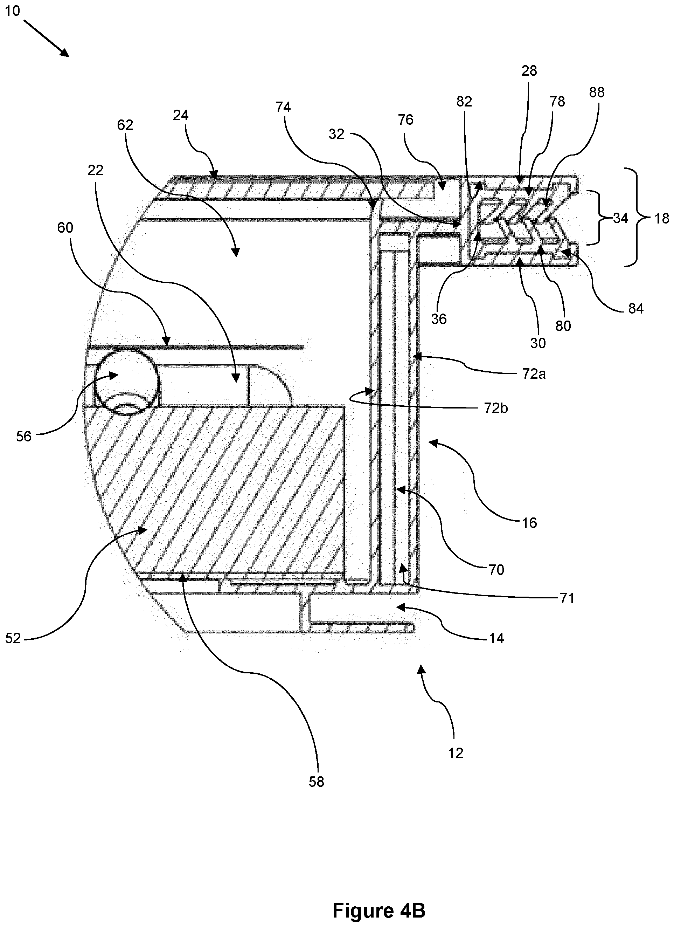

Figure 2 shows the internal components of the solar-thermal-panel system 10. There is indicated the in-roof solar-thermal-panel frame 12 with the parts of an in-roof solar-thermal-panel 26 shown exploded out for clarity. The roof cover connector 18 is formed having a top portion 28 and a bottom portion 30, shown in more detail in Figure 4B, connected by a middle portion 32 so as to form a U-shaped channel, thereby defining a roof-cover-seal receiver 34 for engaging with a roof-cover seal 36.

The roof-cover seal 36 is shaped as a continuous gasket that is seatable within the entirety of the roof-cover-seal receiver 34 within the U-shaped channel. As such, the roof-cover seal 36 has a substantially elongate rectangular shape or profile, equivalent to that of the roof-cover-seal receiver 34. The roof-cover seal 36 is firmly fitted and thereby forms a watertight seal between the roof-cover seal 36 and the roof-cover-seal receiver 34. The roof-cover seal 36 may also be provided as individual overlapping strips that are joinable and not just as one enclosed rectangular gasket.

The frame wall portion 16 is formed having an elongate rectangular shape within which is defined a receiving volume 38 for a solar-thermal-panel 26 to sit once installed. The frame wall portion 16 comprises two longer frame sides 40a and two shorter frame ends 40b so as to form the elongate rectangular shape. The bottom of the frame wall portion 16 is closed by a baseplate 42.

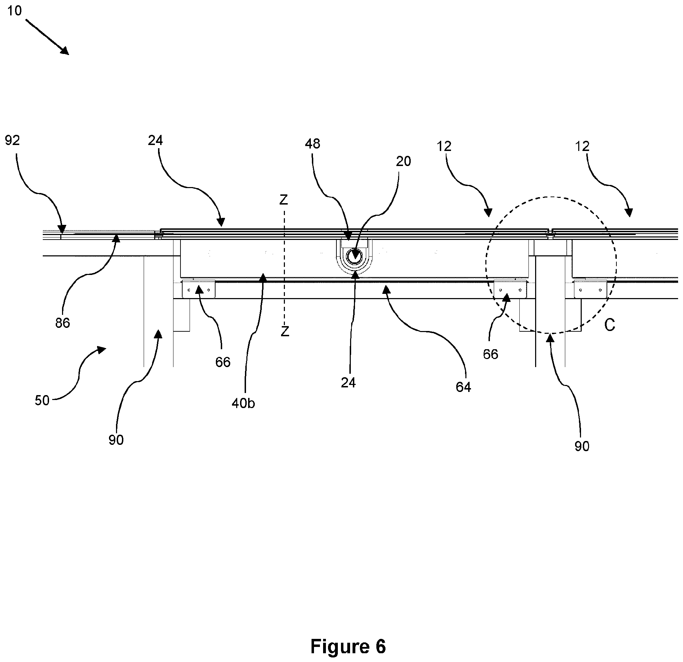

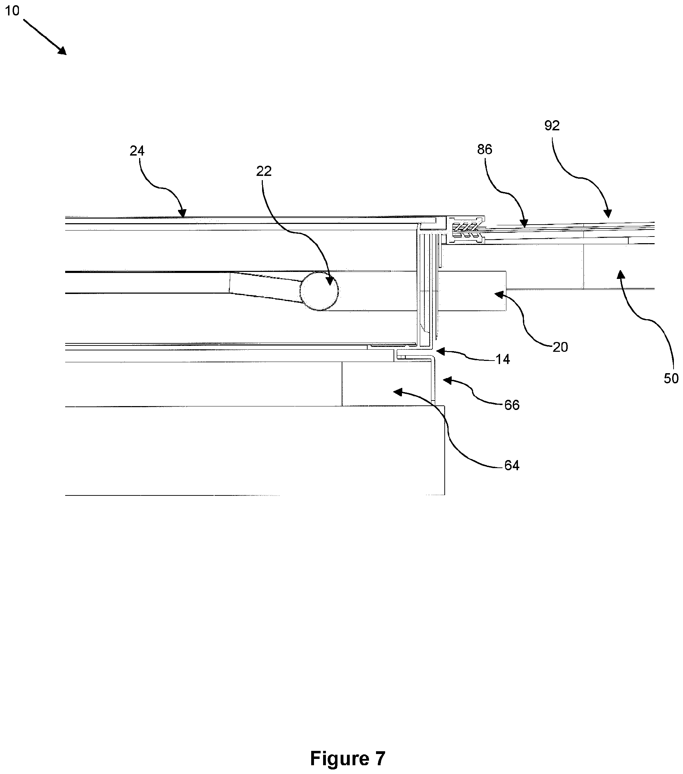

The frame wall portion 16 here contains a receiving aperture 44 for receiving the absorber manifold outlet pipe 20 within each of the shorter frame ends 40b. To secure the absorber manifold outlet pipe 20 in place, the receiving aperture 44 is sealed by a surrounding manifold support body 46, preferably formed from rubber or a similar resiliently flexible material, and is fixed in place with a frame insert member 48. The frame insert member 48 is formed to be the same shape and dimensions as a section of the roof cover connector 18. This congruence in shape allows the roof cover connector 18 to surround the upper section of the in-roof solar-thermal-panel frame 12 without any gaps and permits uninterrupted fixture of the roof-cover seal 36 into the roof cover connector 18. This allows easy fitting and removable access to the absorber manifold 22 for maintenance and repairs without having to dismantle the entire in-roof solar-thermal-panel system 10. It also ensures that the roof-cover seal 36 remains watertight when seated in the roof-cover-seal receiver 34. The in-roof solar-thermal-panel frame 12 further comprises a mounting portion 14, formed to attach to a roof structure 50 as indicated in more detail in Figure 6 and Figure 7.

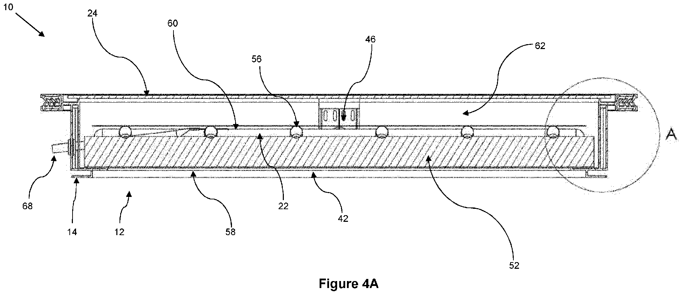

The in-roof solar-thermal-panel system 10 further comprises a seatable solar-thermal-panel 26 that houses a number of internal components for the generation of solar-thermal power, that sit within the receiving volume 38 of the in-roof solar-thermal-panel frame 12. The solar-thermal-panel 26 may comprise an insulation layer 52, which may preferably be formed of a deformable material such as foam, with recessed sections 54 in the shape of the absorber manifold outlet pipe 20, the absorber manifold 22 and a plurality of connected fluid transfer tubes 56, shown in Figure 4A in particular.

Affixed below the insulation layer 52 is a backing sheet 58 upon which it is seated. Seated atop the insulation layer 52 is the absorber 60 which in the embodiment of Figure 2 is a metal absorber 60. The absorber 60 is provided as a flat panel, the absorber manifold 22 being affixed to the underside of the absorber 60, so that the absorber manifold outlet pipe 20 protrudes outwardly from the absorber 60. Alternatively, the outlet pipe could protrude out of a rear or back of the solar-thermal-panel, thereby avoiding the need to penetrate the in-roof solar-thermal-panel frame 12. The absorber manifold 22 may be integrally formed with, or releasably engageable with, the absorber 60. The absorber manifold 22 is in fluid connection with the plurality of fluid transfer tubes 56 which span all or a majority of the length of the in-roof solar-thermal-panel frame 12. The absorber manifold 22 and plurality of fluid transfer tubes 56 are receivable in the recessed sections 54 provided by the insulation layer 52.

The solar-thermal-panel 26 further comprises a glazing layer 24 sitting at a distance from the absorber 60, forming a void space therebetween to act as an air gap 62. The glazing may preferably be transparent or, at the very least, translucent, and formed of a material that can increase the effectiveness of the absorption of solar energy to the absorber 60. The glazing layer 24 is designed to affix in an overlapping manner to the roof cover connector 18 as seen in Figure 4B. The glazing layer 24 is designed to be flush with the roof cover connector 18, permitting a sleek, flat surface of the entire in-roof-solar-thermal-panel system 10.

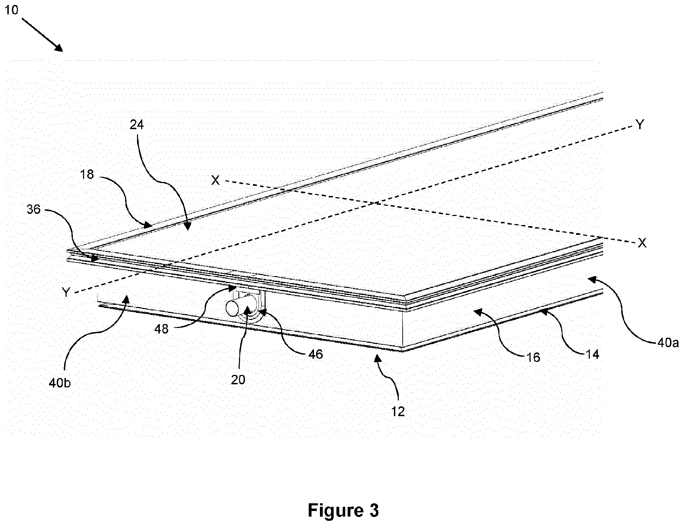

In reference to Figure 3, the in-roof solar-thermal-panel frame 12 is shown at a side angle showing the depth of the receiving volume 38 containing the parts required for a solar-thermal-panel 26, with the glazing layer 24 shown as the top layer. From this angle, one small frame end 40b and one long frame side 40a are shown. Figure 3 specifically shows the frame wall portion 15 and the absorber manifold outlet pipe 20 in more detail.

The roof cover connector 18 extends outwardly from the frame wall portion 16 at the upper perimetric edge so as to form an overhanging portion suitable for seating on the roof structure 50 so that the receiving volume 38 sits between rafters thereof. The roof cover connector 18 defines the roof-cover-seal receiver 34, which in Figure 3 shows the roof-cover seal 36 affixed therein. Also visible is the shape of the mounting portion 14, which is formed as a U-shaped channel that is rectangular and spans the entire dimensions of the in-roof solar-thermal-panel frame 12. The U-shaped channel of the mounting portion 14 permits mounting to a standard roofing batten 64, shown in Figure 6, of a roof structure 50. The U-shaped channel of the mounting portion 14 can receivably engage with a plurality of different sizes and shapes of mounting bracket 66. With respect to the frame wall portion 16, the absorber manifold outlet pipe 20 protrudes outwardly from the interior of the receiving volume 38 via the receiving aperture 44 of an outwardly-facing side of one smaller frame end 40b. The manifold support body 46 is shown, fixed in place with a frame insert member 48 above, formed to be the same shape and dimensions as a section of the roof cover connector 18.

In reference to Figure 4A there is shown a cross-sectional representation wherein the solar-thermal panel 26 and the components associated therein are assembled within the in-roof solar-thermal-panel frame 12. The plurality of fluid transfer tubes 56 are bridging the intervening space between the insulation layer 52 and the absorber 60. The plurality of fluid transfer tubes 56 are seated within the receivable recesses 54 within the insulation layer 52 connected in tandem to the absorber manifold 22 which has two interconnected units at each end linked by the plurality of fluid transfer tubes 56. Visible is the manifold support body 46 oriented to support the absorber manifold outlet pipe 20 as it protrudes outwardly. Also shown is an outwardly-protruding tube 68, that permits electronic components, such as a thermocouple sensor, to be inserted into the in-roof solar-thermal-panel frame 12. Said sensor may be used to obtain the temperature of the pipe and/or fluid, to feed back to a controller and switch the system on or off..

The in-roof solar-thermal-panel frame 12 and associated roof cover connector 18 are shown in detail in Figure 4B. There is shown, the mounting portion 14 which comprises a U-shaped channel that is rectangular which permits mounting to a standard roofing batten 64 of a roof structure 50. Preferably, the mounting portion 14 extends around the entire perimeter of the baseplate 42 so that mounting brackets 66 can be engaged at any side or edge of the baseplate 42 via the mounting portion 14. The mounting portion 14 is comprised of a U-shaped channel that can receivably engage with a plurality of different sizes and shapes of mounting bracket 66. The mounting portion 14 is formed as said U-shaped channel to allow stable locking of the mounting bracket 66 to the roofing batten 64 from all sides of the in-roof solar-thermal-panel frame 12, increasing stability of the installed in-roof solar-thermal-panel frame 12. Also shown is the frame wall portion 16 that comprises an internal cleat 70, upstanding from the mounting portion 14 so as to provide strength and stability for the in-roof solar-thermal-panel frame 12 and to support the components of the solar-thermal panel 26 that are seatable therein. Preferably the internal cleat 70 is formed of steel or another material having high tensile strength. The cleat 70 is located in a hollow structural support cavity 71 of the frame wall portion 16. Said hollow structural support cavity 71 may be suitable for the placement of solid or non-solid materials, such as insulation, cabling, and the like.

The internal cleat 70 may be integrally formed with or welded on and surrounded by an outer casing surface 72a and an inner casing surface 72b which together form the frame wall portion 16. At the upper perimetric edge of the frame wall portion 16, the roof cover connector 18 protrudes outwardly from the frame wall-portion 16. The roof cover connector 18 is arranged so that the top portion 28 of the roof cover connector 18 is level and flush with the glazing layer 24, or substantially so. This is specifically achieved through a seating lip 74 onto which the glazing layer 24 is positioned so as to be flush, with a physical connection being made via introduction of adhesive or similar fixation means via a bonding channel 76.

Additionally, it is preferable, but not essential, that the in-roof solar-thermal-panel frame 12 comprises a depth of at least 35mm and, of that depth, the roof cover connector 18 comprises approximately 15-25% of the overall depth, the frame wall portion 16 comprises approximately 70-75% of the overall depth, and the mounting portion 14 comprises approximately 5-15% of the overall depth.

The resiliently flexible roof-cover seal 36 is provided in the form of a gasket and is located within the roof-cover-seal receiver 34. The roof-cover seal 36 is formed as having a top portion 78, and a bottom potion 80, so as to be U-shaped and/or otherwise complementarily-shaped to the roof-cover-seal receiver 34. The roof-cover seal 36 may preferably be formed from rubber or another polymer composite. The roof-cover seal 36 is resiliently flexible so that it can be stretched and fitted within the roof-cover-seal receiver 34, thereby forming a tight seal between the roof-cover-seal receiver 34 and the roof-cover seal 36.

The roof-cover-seal receiver 34 is designed so that the receiving aperture 44 of the U-shaped channel is smaller than the roof-cover seal 36 to preclude the seal from loosening during installation or during use. More preferably, the roof-cover seal 36 is formed of a hydrophobic, water-impermeable material, or at least covered with a material as such. Within the roof-cover-seal receiver 34 is a series of complementarily-engageable seating elements formed as recesses 82 in both the top portion 28 and the bottom portion 30 of the roof-cover-seal receiver 34. These recesses 82 are formed to seat protruding fixing members 84, outwardly facing from the outer surfaces of the top portion 78 and the bottom potion 80 of the roof-cover seal 36. In order to form a water-tight seal with a roof cover 86, the top portion 78 and bottom potion 80 of the roof-cover seal 36 are formed to have a series of internally overlapping and protruding seal members 88. The top-portion seal members 88outwardly protrude from a downfacing position from the inner surface of the top portion 78 of the roof-cover seal 36 whilst the bottom-portion seal members 88and outwardly protrude from an up-facing position from the inner surface of the bottom potion 78 of the roof-cover seal 36.

Each of the top portion seal members 88and each of the bottom portion seal members 88are positioned at spaced intervals from one another so as to overlap in such a way that allows the top portion seal members 88 to protrude past the apex of the bottom portion seal members 88. This format allows a number of water-tight barriers to form when the roof-cover seal 36 is physically engaged with the roof cover 86. The seal members 88 may protrude from an angle or a substantial angle anywhere between 85 to 175 degrees but are most preferable when protruding at an angle anywhere between 110- and 150-degrees. The seal members 88 may also be formed to protrude from the inner surface of the top portion 78 and the inner surface of the bottom potion 80 of the roof-cover seal 36 as outwardly at a vertical 90-degree angle. These vertically-protruding seal members 88 would also be positioned at spaced intervals so as to form the same overlapping arrangement as with angular seal members 88. Both the aforementioned arrangements allow substantial misalignment of the seal members 88 from the top portion 78 and bottom portion 80 of the roof-cover seal 36, increasing the number of barriers present to prevent the entry of water into the gasket channel.

Specifically, in reference to the in-roof solar-thermal-panel frame 12 itself, the roof cover connector 18 may be offset from the frame wall portion 16 so as to be angular or substantially angular. This may be to fit sloped top roofing structures 50 or different variations of building construction. Furthermore, it may allow different embodiments and shapes of in-roof-solar-thermal-panel frames 12 that go beyond the rectangular embodiment. The in-roof solar-thermal-panel frame 12 is formed as, or substantially formed as having an S-shape architecture, but may also be formed of a Z shape, or any other shape that can include a mounting portion 14, a frame wall portion 16 and a roof cover connector 18.

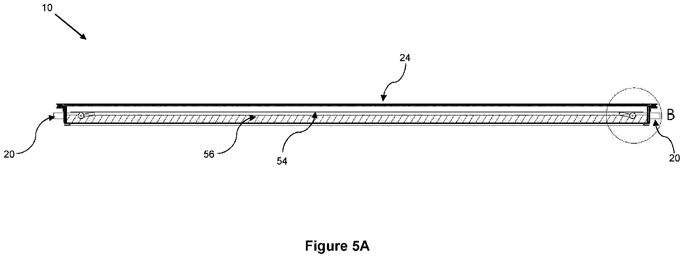

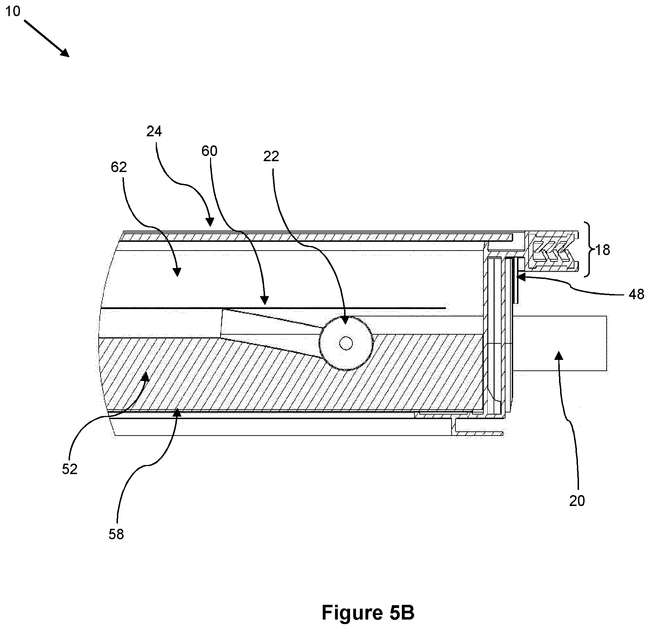

Figures 5A and 5B show the lateral positions of the absorber manifold outlet pipes 20 of the absorber manifolds 22, which are recessed into the insulation layer 52 relative to the fluid transfer tubes 56.

Figure 5B specifically shows the constituent functional parts of the solar-thermal panel frame 12 in more detail. The absorber manifold outlet pipe 20 is seated within the recess 54 formed by the deformable insulation layer 52 and connected to the absorber manifold outlet pipe 20 protruding outwardly from the frame wall portion 16. Also shown is the roof-cover-seal receiver 34 as part of the roof cover connector 18, showing that the roof-cover seal 36 is accessible from the longer frame sides 40a in addition to the smaller frame ends 40b. This can also be said for the mounting portion 14 which is also accessible from the longer-frame sides 40a so as to permit seating on a roofing batten 64 from various points within the roof structure 50. The absorber 60 is also shown in physical connection with the absorber manifold 22.

Figure 6 shows an in-use arrangement of the in-roof solar-thermal panel system 10 where the solar-thermal panel frame 12 is seated within a roof structure 50. There is shown, an installed solar-thermal panel frame 12 from the perspective of the smaller frame end 40b. A roofing batten 64 is shown interconnected between two adjacent rafters 90 of a roof structure 50. The roofing batten 64 is installed or retrofitted at a specific depth within the roof rafters 90 so as to permit seating of the roof cover connector 18 atop the roof structure 50, and the receiving volume 38 to be seated between the void depth provided by the roof rafters 90, permitting a flush fitting of the roof cover connector 18 with the roof tiles or slates 92. Alternatively, the solar-thermal panel frame 12 may be affixed directly to the roof rafters 90 of the roof structure in lieu of a roofing batten 64.

Connecting the mounting portion 14 to the roofing batten 64 are two mounting brackets 66. Preferably there is at least one mounting bracket 66 and this will be inserted into the open channel volume of the mounting portion 14 and held in place through screws fixed into the roofing batten 64. The in-roof solar-thermal-panel frame 12 is thereby clamped in place, with the downwards pressure of the mounting portion 14 towards the roofing batten 64 causing affixation. However, another form of affixation may be used. One such alternative means of connecting the roofing batten 64 to the mounting portion 14 may be through a fixing that forms an interference fit, receivable within the open channel volume of the mounting portion 14, affixing the roofing batten 64 to both the top and bottom parts of the mounting portion 14 through outward physical pressure. In an alternative embodiment, the mounting portion may not be necessary, and the solar-thermal-panel frame can be connected to the roof structure by affixation via the in-roof frame portion. Furthermore, the use of mounting brackets in this embodiment does not preclude the use of other modes of affixation such as screws or, as mentioned, by means of an interference fit.

The roof cover connector 18 of one in-roof-solar-thermal-panel frame 12 is in physical connection with flashing 86, forming part of a roof cover or, directly or indirectly with, an adjacent second in-roof solar-thermal-panel frame 12 so that the first in-roof-solar-thermal-panel frame 12 is in-use flush or substantially flush with both the flashing 86 and the second adjacent in-roof-solar-thermal-panel frame 12. This is either flashing connected to the roof structure 50 or strip flashing interconnected between two adjacent roof-cover seals 36 of adjacent in-roof-solar-thermal-panel frames 12. The flashing may also be provided in different colours and sizes to increase the aesthetic appeal of the flashing 86. Alternatively, roof tiles or slates 92 could be directly connected with the roof-cover seal 36, thereby avoiding the need for flashing, though there would be a greater risk of leak paths forming in such a scenario.

Figure 7 shows the mounting portion 14 fastened to the roof structure 50 via a roofing batten 64. The absorber manifold outlet pipe 20 is protruding outwardly from the receiving volume 38 via the receiving aperture 44. The mounting bracket 66 is shown spanning the U-shaped channel of the mounting portion 14, applying downfacing pressure through affixation into the roofing batten 64 via screws or another fixing element. It may also be that there are multiple mounting brackets 66 that span the U-shaped channel of the mounting portion 14 which permits a more secure fastening to the roofing batten 64.

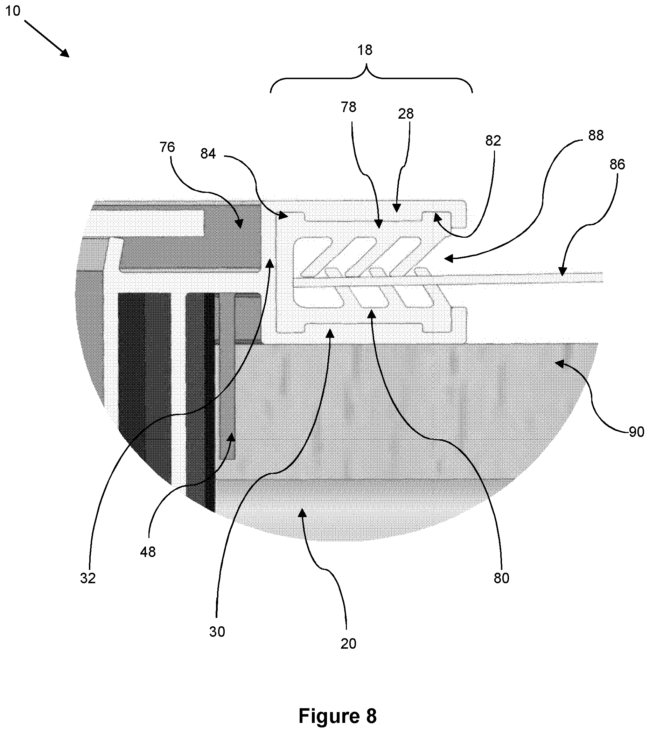

Figure 8 shows an enlarged view of the roof-cover seal 36 of Figure 7 being engaged with flashing 86 in the form of roof flashing whilst omitting any associated roof tiles or slates 92. The roof cover connector 18 is shown as being seated directly atop the roofing structure 50 so that no gaps are present. Furthermore, the downfacing pressure provided by the mounting bracket 66 of the mounting portion 14 attached to the roof batten 64 provides an additional level of seal between the in-roof-solar-thermal-panel frame 12 and the roof structure 50. Visible within the roof-cover seal 36 are the top portion seal members 88 and the bottom portion seal members 90 positioned at spaced intervals so as to allow the top portion seal members 88 to be misaligned with the relative positions of the bottom portion seal members 90. When connected to the flashing 86, this allows a number of water-tight seals to be formed, reducing the probability of water entry within the inner surfaces of the roof-cover seal 36.

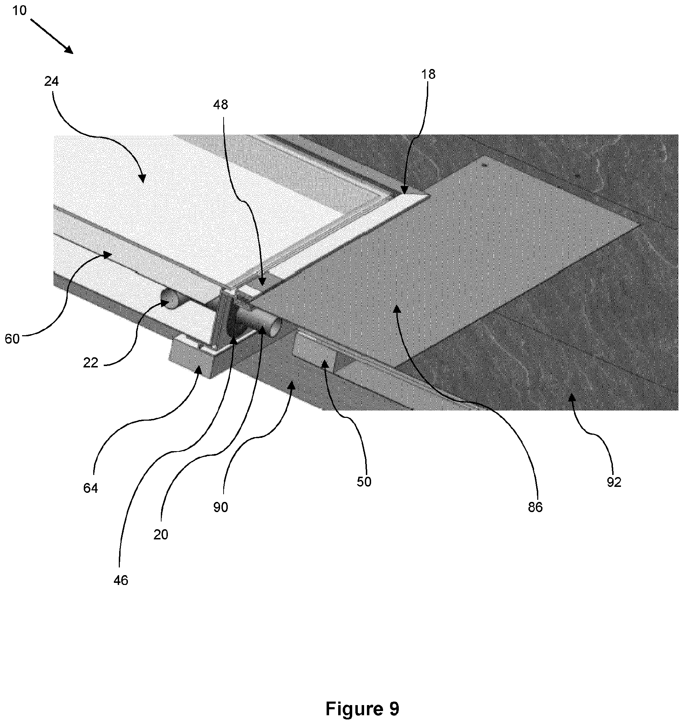

Figure 9 shows the flashing 86 engaged with the small frame end 40b of the in-roof solar-thermal-panel frame 12. The side of the absorber manifold 22 is shown, and the protruding absorber manifold outlet pipe 20 is seen extending into the void space of the roof structure 50, secured by the manifold support body 46, which in use would be connected to a fluid circuit. Said manifold support body 46 may include condensation venting apertures. Also shown is the frame-insert member 48 embedded into the in-roof solar-thermal-panel frame 12 above the position of the absorber manifold outlet pipe 20 so that this can be easily accessed.

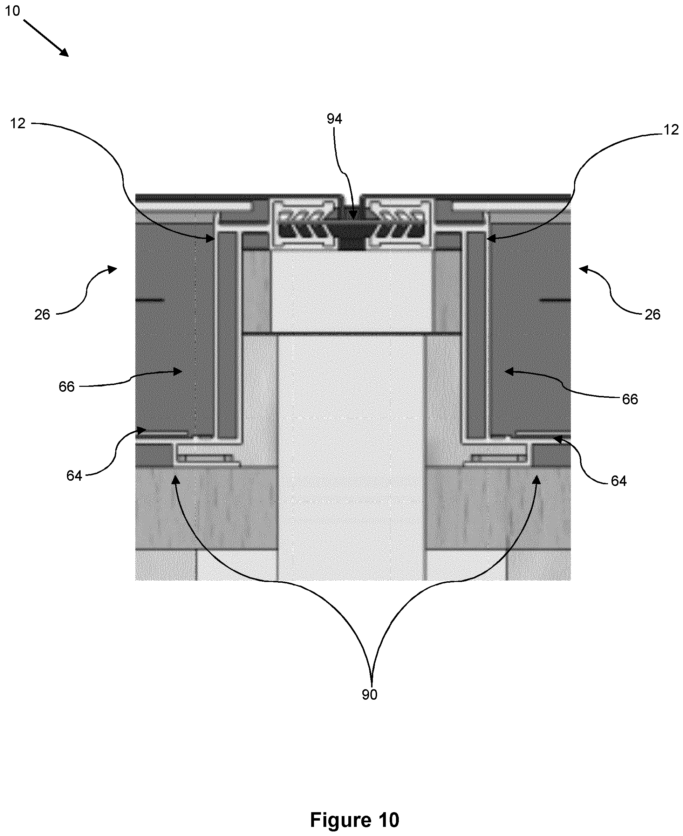

Figure 10 shows an assembly of two in-roof solar-thermal-panel frames 12 installed adjacent to one another. Shown is an upstanding rafter 90 of the roof structure 50 upon which the in-roof solar-thermal-panel frames 12 are seated, the roof cover connectors 18 of each adjacent frame protruding outwardly so as to overlap the shared rafter 90 of the roof structure 50. The roof-cover seals 36 of both in-roof solar-thermal-panel frames 12 are shown in physical connection with a roof cover strip 94. As such, a watertight seal is formed between the adjacent in-roof solar-thermal-panel frames 12 and prevents the entry of water to the roof structure 50 below.

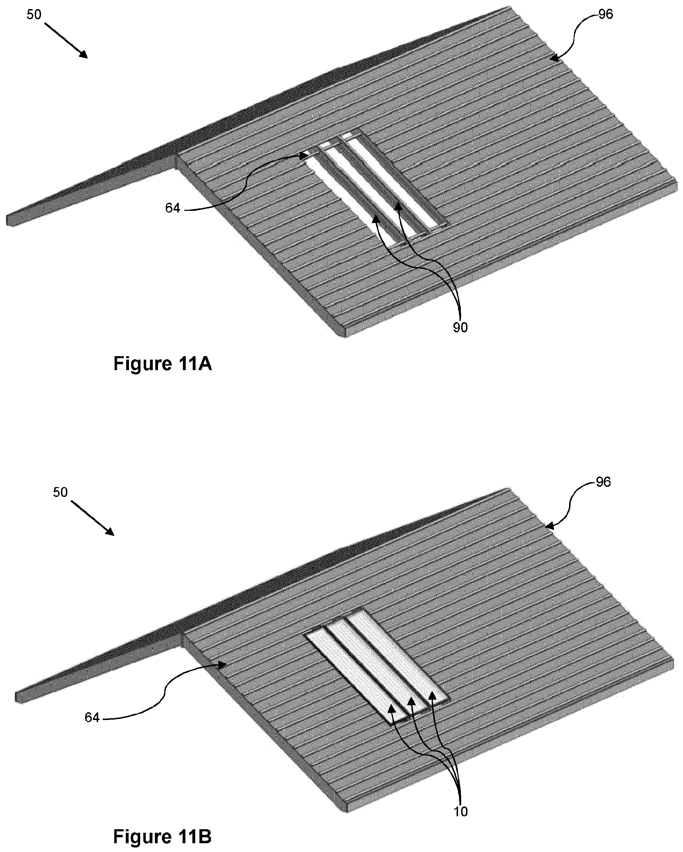

In reference to Figures 11A and 11B, there is the in-roof solar-thermal-panel frames 12 with associated solar-thermal-panels 26 installed within standard roofing structures where the insulating membrane 96 of the roof structure 50 is placed below the roofing battens 64 atop the roof rafters 90 using roofing battens 64 so as to be installed adjacent to one another and be flush or substantially flush with the overall roof structure 50. The installation process is designed to be suitable for the seating of in-roof solar-thermal-panel frames 12 within standard rafter 90 spacing of 600mm. The roofing batten 64 is of a standard dimension of 25x50mm. In the depicted embodiment, the in-roof solar-thermal-panel frame 12 penetrates the insulating membrane 96; however, shallower frames may obviate this need.

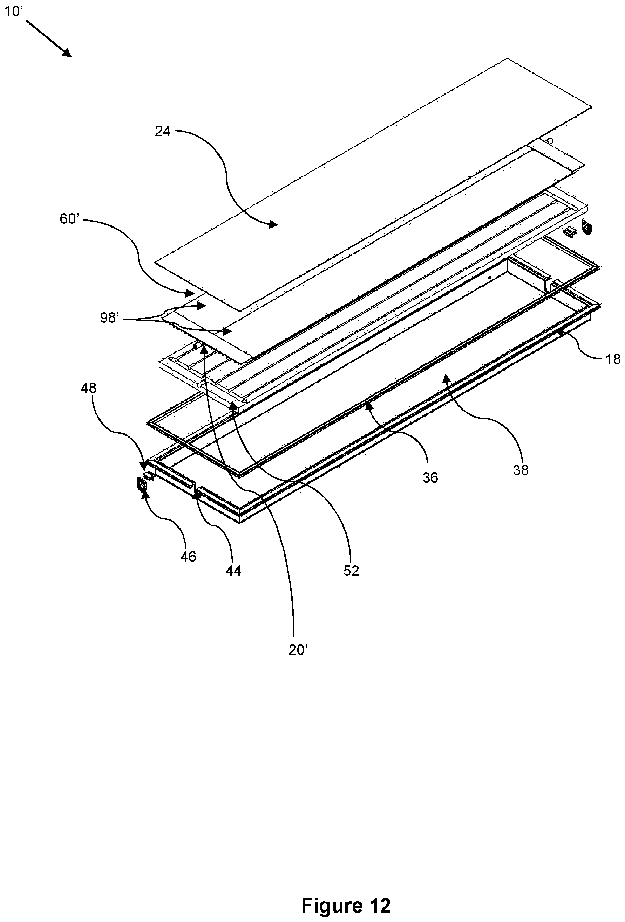

A second embodiment of an in-roof solar-thermal-panel system 10' is shown in Figure 12. Identical or similar reference numerals will be used to refer to identical or similar components of the first embodiment, and further detailed description is omitted for brevity. The absorber 60' is here instead formed from a polymer material, having two individual panels 98' connected between opposed absorber manifolds 20'. This layer is readily exchangeable to suit different weather conditions and climates.

Whilst the invention has been described as having two particular embodiments with different compositions of absorber, it will be apparent that other materials of absorber could be used to capture solar-thermal energy.

Furthermore, whilst the invention primarily deals with installation of a solar-thermal-panel frame that is suitable for receiving the elements to implement generation of solar-thermal power, this does not preclude the possibility of integrated photovoltaics as a means to generate electrical energy within the frame in addition to the solar-thermal components. This may be implemented as a hybrid system containing the parts required for a solar-thermal-panel and/or a photovoltaic panel.

The invention, as described above, has been described as an embodiment exclusive to roof structures of houses, but does not preclude the installation of the solar-thermal panels on other types of roof structure including roofs with atypical shapes and flat roofs. Further, the invention may be installed on the facade of a building, outwardly facing.

Here provided is an in-roof solar-thermal-panel system suitable for the generation of solar-thermal power comprising, a solar-thermal-panel frame formed as having a roof cover connector, frame wall portion and a mounting portion. The solar-thermal-panel frame is suitable for seating the elements associated with the solar-thermal panel and is installable onto a roof structure so as to be level with the surrounding roof cover and providing a flush appearance.

The words 'comprises/comprising' and the words `having/including' when used herein with reference to the present invention are used to specify the presence of stated features, integers, steps, or components, but do not preclude the presence or addition of one or more other features, integers, steps, components, or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various changes and modifications will be apparent to persons skilled in the art without departing from the scope of the present invention as defined by the appended claims.

## Claims

1. An in-roof solar-thermal-panel frame (12) comprising:
a mounting portion (14) for engaging with a roof structure (50) via an associated fastener;
a frame wall portion (16) extending from the mounting portion (14) to define a receiving volume (38) for receiving a solar-thermal panel (26) therein; and
a roof cover connector (18) extending outwardly from a top perimeter of the frame wall portion (16), the roof cover connector (18) having a roof-cover-seal receiver (34) for receiving a roof-cover seal (36) therein, such that a top surface of the roof cover connector (18) is in-use flush, substantially flush or proud to a roof cover when the frame wall portion (16) is mounted within the said roof structure (50).

2. An in-roof solar-thermal-panel frame (12) as claimed in claim 1, further comprising a roof-cover seal (36) receivably engaged with the roof-cover-seal receiver (34).

3. An in-roof solar-thermal-panel frame (12) as claimed in claim 1 or claim 2, wherein the roof-cover seal (36) comprises a resiliently flexible material.

4. An in-roof solar-thermal-panel frame (12) as claimed in claim 2 or claim 3, wherein the roof-cover seal (36) comprises a plurality of individual projecting seal members (88, 90).

5. An in-roof solar-thermal-panel frame (12) as claimed in any of the preceding claims, wherein the roof-cover-seal receiver (34) and roof-cover seal (36) respectively comprise complementarily-engageable seating elements for retaining the roof-cover seal (36) in the roof-cover-seal receiver (34).

6. An in-roof solar-thermal-panel frame (12) as claimed in claim 5, wherein the said complementarily-engageable seating element of the roof-cover-seal receiver (34) is provided as a receiver recess (82) and the complementarily-engageable seating element of the roof-cover seal (36) is provided as a ridge seatable in the recess (82) or *vice versa.*

7. An in-roof solar-thermal-panel frame (12) as claimed in any of the preceding claims, wherein the roof cover connector (18) has a top portion (28) and a bottom portion (30) between which is defined the roof-cover-seal receiver (34).

8. An in-roof solar-thermal-panel frame (12) as claimed in any of the preceding claims, wherein the in-roof solar-thermal-panel frame (12) is dimensioned to fit between a void between adjacent roofing rafters (90).

9. An in-roof solar-thermal-panel frame (12) as claimed in any of the preceding claims, wherein the mounting portion (14) comprises a bracket engagement connector for engaging with a mounting bracket (66) to connect the mounting portion (14) to the roof structure (50).

10. An in-roof solar-thermal-panel frame (12) as claimed in any of the preceding claims, wherein the frame wall portion (16) comprises a hollow structural support cavity (71) for the placement of solid or non-solid materials.

11. An in-roof solar-thermal-panel system (10) comprising at least one in-roof solar-thermal-panel frame (12) as claimed in any one of the preceding claims and a solar-thermal panel (26) engaged with the at least one in-roof solar-thermal-panel frame (12).

12. An in-roof solar-thermal-panel system (10) as claimed in claim 11, wherein the solar-thermal panel (26) comprises at least one of: a glazing layer (24); an absorber (60); an insulation layer (52); and a backing sheet (58); receivable within the receiving volume (38) of the at least one in-roof solar-thermal-panel frame (12).

13. An in-roof solar-thermal-panel system (10) as claimed in claim 11 or claim 12, wherein the solar-thermal panel (26) comprises an absorber manifold (22) receivably engageable with the frame wall portion (16), the roof cover connector (18) and/or the mounting portion (14).

14. An in-roof solar-thermal-panel system (10) as claimed in any one of claims 11 to 13, further comprising a roof cover strip (94) installable between roof-cover seals (36) of adjacent in-roof solar-thermal-panel frames (12) or other existing solar-thermal panels (26) and solar photovoltaic panels.

15. A method for installing an in-roof solar-thermal-panel system into a roof structure, the method comprising the steps of:
a. providing an in-roof solar-thermal-panel system as claimed in any one of claims 11 to 14;
b. engaging a roof-cover seal with the roof-cover-seal receiver of the in-roof solar-thermal-panel frame;
c. seating the mounting portion of the in-roof solar-thermal-panel frame on a roof structure into which the in-roof solar-thermal-panel frame is to be installed, so that the frame wall portion defines a receiving volume between adjacent rafters of the roof structure; and
d. engaging a roof cover member of the roof cover of the roof structure with the roof-cover seal so as to be flush or substantially flush to the said roof cover to therefore form a water-tight seal between the in-roof solar-thermal-panel frame and the roof cover.
